# EUROPEAN PATENT APPLICATION

(11) **EP 4 394 940 A1**
(43) Date of publication of application: **03.07.2024**
(21) Application number: 23194341.6
(22) Date of filing: 30.08.2023
(51) Int. Cl.: H01M 4/485, G01N 21/73, H01M 4/505, H01M 4/525, H01M 4/58

(54) **METHOD FOR QUALITY EXAMINATION OF CATHODE MATERIALS FOR LITHIUM-ION BATTERIES**

(30) Priority: 29.12.2022 TW 111150608
(71) Applicant: Advanced Lithium Electrochemistry Co., Ltd., Taoyuan City 33068 (TW)
(72) Inventor: Liao, Yung-Tsung, 33068 Taoyuan City (TW); Cheng, Yu-Chun, 33068 Taoyuan City (TW); Kuo, Chi-Huang, 33068 Taoyuan City (TW)
(74) Representative: Cabinet Chaillot

(57) **Abstract**

A method for quality examination of cathode materials for lithium-ion batteries comprising steps of adding cathode material powders to a solution of a surfactant to form a cathode material mixture solution; transferring the cathode material mixture solution to ball milling; filtering the cathode material mixture through a 200-mesh sieve, measuring the weight of a first residue that does not pass through the sieve, and determining whether the weight of the first residue exceed a first threshold value; filtering the cathode material mixture through a 420-mesh sieve, measuring the weight of a second residue that does not pass through the sieve, and determining whether the weight of the second residue exceed a second threshold value; and analyzing the second residual and determining whether multiple metal elements exceed multiple threshold values.

## Description

### FIELD OF INVENTION

The present invention relates to a method for quality inspection, particularly to a quality inspection method for battery materials.

### BACKGROUND OF THE INVENTION

Lithium-ion batteries are high-performance batteries widely used in various fields due to their various advantages such as lightweight, high energy density, high voltage, low self-discharge rate, and long cycle life. For instance, lithium-ion batteries find extensive applications in consumer electronic products such as mobile phones, laptops, digital cameras, power tools, and electric vehicles, providing stable power supply. Additionally, lithium-ion batteries are employed in the field of energy storage, such as solar and wind energy generation systems, for storing the converted electrical energy from solar or wind sources. Among the key technologies in lithium-ion batteries, cathode material plays a crucial role in lithium-ion batteries. During the charging process, lithium ions are stored in the cathode material, and during discharge, lithium ions are released from the cathode material to provide electrical energy for the battery. Therefore, the quality of the cathode material is critical for the performance and lifespan of lithium-ion batteries.

However, during the production process of lithium-ion batteries, the cathode material may contain impurities such as metal residues, oil contamination, dusts, and other contaminants. These impurities can adversely affect the performance of the batteries, leading to decreased performance, shortened battery life, and even safety concerns. Furthermore, the particle size and distribution of the cathode material also impact the performance of the lithium-ion batteries.

Consequently, several methods have been developed for inspecting the cathode materials of lithium-ion batteries. However, existing methods for quality inspection of cathode materials mostly involve subjecting the cathode material samples to acid treatment and then detecting the presence of impurities and magnetic substances. Such inspection methods make it difficult to detect impurities in the cathode material, and the standards for quality control vary. Some inspection procedures are complex and cumbersome, making it challenging to accurately and rapidly determine whether the quality of the cathode material meets the standards. Therefore, there is an urgent need in the field to develop a rapid, accurate, and highly sensitive quality inspection method for lithium-ion battery cathode materials.

### SUMMARY OF THE INVENTION

To solve abovementioned problems, this present invention discloses a method for quality examination of cathode materials for lithium-ion batteries comprising steps of: adding cathode material powders to a surfactant solution to form a cathode material mixture solution; transferring the cathode material mixture solution to ball milling to maintain even dispersion of the cathode material powders in the cathode material mixture solution; filtering the cathode material mixture through a 200-mesh sieve, measuring the weight of a first residue that does not pass through the sieve, and determining whether the weight of the first residue exceed a first threshold value; filtering the cathode material mixture through a 420-mesh sieve, measuring the weight of a second residue that does not pass through the sieve, and determining whether the weight of the second residue exceed a second threshold value; and analyzing the second residual and determining whether multiple metal elements exceed multiple threshold values.

Wherein, the surfactant solution is a non-ionic surfactant solution.

Wherein, the non-ionic surfactant solution comprises polyoxyethylene lauryl ether, polyoxypropylene lauryl ether, or polyoxyethylene-polyoxypropylene lauryl ether.

Wherein, the step for analyzing the second residual utilizes inductively coupled plasma optical emission spectrometry (ICP-OES) to determine the elemental composition of the second residual.

Wherein, the cathode material powders comprise lithium iron phosphate (LiFePO₄, LFP), lithium cobalt oxide (LCO), ternary materials (NCM), lithium manganese oxide (LMO), lithium titanate (Li₄Ti₅O₁₂, LTO), or lithium nickel manganese oxide (LNMO).

Wherein, the cathode material mixture solution comprises 30 wt% of the cathode material powders.

Wherein, the metal elements comprise sodium, nickel, copper, magnesium, chromium, manganese, calcium, or zinc.

Wherein, the threshold values comprise a concentration limit of the metal elements in the second residue and a concentration limit of the metal elements in the cathode material powders.

### BRIEF DESCRIPTION OF THE DRAWINGS

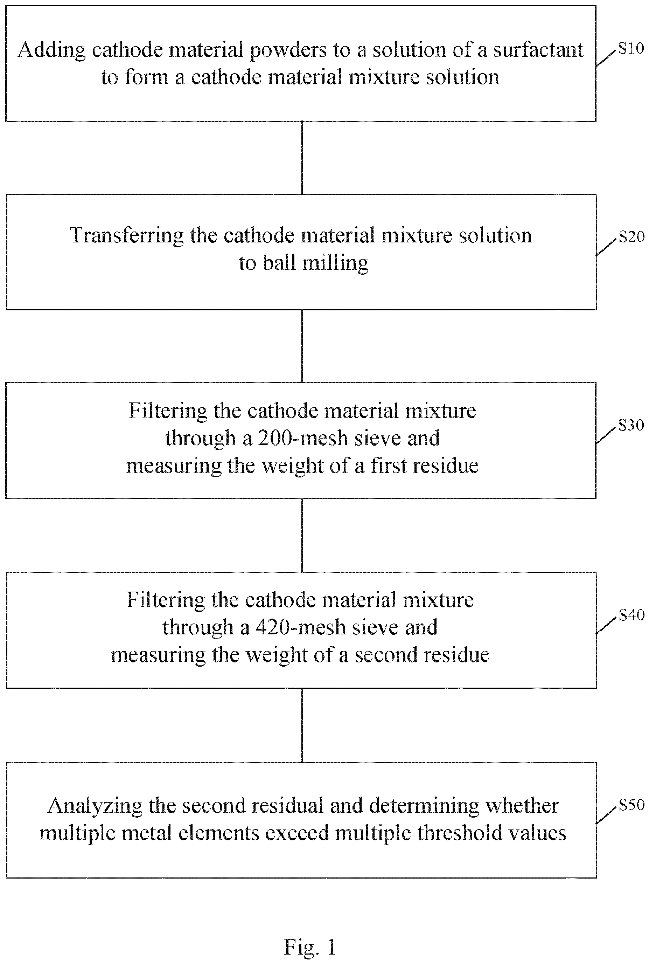

Fig. 1 depicts an embodiment of a method in accordance with present invention.

### DETAILED DESCRIPTION OF THE PREFERRED EMBODIMENTS

As indicated in the present invention and the claims, unless otherwise explicitly indicated in the context, terms such as "one," "a," "an," or "the" are not limited to singular form and can include plural forms. Generally, the terms "comprising" and "including" only indicate the inclusion of explicitly identified steps and elements, which do not exclude the presence of other steps or elements. Methods or devices may also include additional steps or elements.

With reference to Fig. 1, a preferred embodiment of the present invention includes following steps:

Step S10: Add cathode material powders to a surfactant solution and mix to form a cathode material mixture solution. Surfactant of the surfactant solution significantly reduces the surface tension of the cathode material mixture solution, enhancing the evenly dispersion of the cathode material powder in the solution. Preferably, the surfactant solution is a water-based solution containing 2 wt% of a non-ionic surfactant. The non-ionic surfactant includes polyoxyethylene lauryl ether, polyoxypropylene lauryl ether, and polyoxyethylene-polyoxypropylene lauryl ether. Preferably, the method in accordance with this invention can be used to test various cathode materials, including but not limited to lithium iron phosphate (LiFePO₄, LFP), lithium cobalt oxide (LCO), ternary materials (NCM), lithium manganese oxide (LMO), lithium titanate (Li₄Ti₅O₁₂, LTO), and lithium nickel manganese oxide (LNMO). Preferably, the cathode material mixture solution contains approximately 30 wt% of the cathode material powders.

Step S20: The cathode material mixture solution is transferred to a ball mill for the purpose of maintaining even dispersion of the cathode material powders in the cathode material mixture solution through ball milling. Ball milling refers to the process of placing the cathode material powders in a ball mill, where the grinding bodies rotate within the grinding chamber to achieve powder grinding. During ball milling, the grinding bodies continuously impact the cathode material, resulting in the mechanical fragmentation of the cathode material powder and causing its dispersion. The ball milling process ensures that the cathode material powder is dispersed in the solution without agglomeration.

Step S30: The cathode material mixture solution is filtered through a 200-mesh sieve, and a first residue that does not pass through the sieve is measured. Here, the term "200-mesh" approximately corresponds to a sieve with pore diameters of about 75 micrometers. After passing the cathode material mixture solution through the sieve, the weight of the first residue that does not pass through the sieve is measured. If the weight percentage of the first residue exceeds a first threshold value, the quality of this batch of the cathode material is determined to be unacceptable. In one embodiment, the first threshold value is set to 0.0001, which means that if the weight of the first residue exceeds 0.005 grams after the cathode material mixture solution containing 5 kilograms of cathode material powder undergoes the filtration process in Step S20, the quality of the batch of cathode material is considered unacceptable.

Step S40: The cathode material mixture solution that has passed through the 200-mesh sieve is filtered again using a 420-mesh sieve, and a second residue that did not pass through the sieve is measured. Here, the 420-mesh corresponds approximately to a pore diameter of around or less than 36 microns. After the cathode material mixed solution passing through the 420-mesh sieve, the weight of the second residue is measured. If the weight ratio of the second residue exceeds a second threshold value, it is determined that the quality of the batch of cathode material is not acceptable. In one embodiment, the second threshold value is 0.00894, which means that if the weight of the second residue exceeds 0.447 grams after the filtration process in step S40 in the cathode material mixed solution containing 5 kilograms of the cathode material powder, it is determined that the quality of this batch of cathode material is not acceptable.

Step S30 and step S40 ensure that the particle size of the cathode material powder tested meets the specifications, thereby ensuring the quality of the cathode material powders.

Step S50: Analyze the second residual and determine whether multiple metal elements exceed multiple threshold values. In step S50, the analysis is performed on the multiple metal elements in the second residual material to determine whether the multiple metal elements exceed multiple threshold values. This analysis helps infer whether the concentrations of these metal elements in the cathode material powder exceed the limits. The purpose of this analysis is to ensure that the concentrations of these metal elements do not exceed the limits and do not lead to issues such as self-discharge, poor cycle life, or safety concerns in batteries manufactured using the cathode material powders. In step S50, the metal elements being analyzed include sodium, nickel, copper, magnesium, chromium, manganese, calcium, and zinc. In one embodiment, after undergoing steps S10 to S40, a lithium iron phosphate material is analyzed using inductively coupled plasma optical emission spectrometry (ICP-OES) to determine the elemental composition of the second residual. This analysis helps confirm whether the lithium iron phosphate material contains any metal elements other than phosphorus, lithium, and iron.

The detection sensitivity is increased by analyzing the second residual and confirming whether multiple metal elements exceed multiple threshold values. Without undergoing the wet sieving process in steps S30 and S40, many metal elements may be encapsulated within larger particles, making them difficult to be identified. By performing wet sieving in steps S30 and S40 and analyzing the second residual, the concentration of the metal elements in the second residual is greatly increased, leading to improved detection of the metal elements. In a preferred embodiment, the threshold values for the metal elements in the second residual are presented in TABLE 1.

**TABLE 1**

| Metal elements | Threshold values (mg / kg of the second residual) |
|---|---|
| Sodium (Na) | 500 |
| Nickel (Ni) | 440 |
| Copper (Cu) | 30 |
| Magnesium (Mg) | 620 |
| Chromium (Cr) | 650 |
| Manganese (Mn) | 190 |
| Calcium (Ca) | 1470 |
| Zinc (Zn) | 150 |

In this embodiment, the cathode material powder must not only comply with the threshold values for the metal elements in the second residual, as shown in Table 1, but also undergo a back-calculation of the concentrations of the metal elements within the cathode material based on the measurements obtained from the second residual. The metal elements in the cathode material powders must be lower than the respective upper limit values for each metal element to pass the quality inspection. The upper limit values for the metal elements in the cathode material powders are provided in TABLE 2.

**TABLE 2**

| Metal elements | Upper limit values (µg / kg of the cathode material) |
|---|---|
| Sodium (Na) | 5 |
| Nickel (Ni) | 5 |
| Copper (Cu) | 1 |
| Magnesium (Mg) | 12 |
| Chromium (Cr) | 5.6 |
| Manganese (Mn) | 5 |
| Calcium (Ca) | 22 |
| Zinc (Zn) | 3 |

Based on Table 2, the metal element values obtained from the second residual measured in step S50 of the present invention can be used to estimate the concentrations of the metal elements in the cathode material powders. By measuring the second residual material that passes through the 200-mesh sieve but does not pass through the 420-mesh sieve, the concentration of each metal element can be effectively concentrated. This approach significantly improves the lower limit values for detecting metal elements in the cathode material powders without the need for extensive efforts or expensive upgrades to testing equipments. The method in accordance with this invention ensures strict quality control of the cathode material powders and guarantees compliance with the standards for manufacturing high-performance and safe batteries.

Based on the aforementioned description, the present invention has the following advantages:
1. The method of the present invention can help determine whether the proportion of cathode material powders with particle size larger than 40 microns is excessively high. This helps to prevent the cathode material powders from having oversized particles, which can lead to increased internal resistance and higher thermal losses in batteries made from that batch of the cathode material.
2. The method of the present invention involves analyzing the elemental composition of the second residue, which has passed the first filtration but not the second filtration. By initially excluding larger particles that cannot pass the 200-mesh sieve, the sensitivity to detect metallic impurities in the cathode material powders is greatly increased. Compared to the conventional direct sampling method, this significantly improves the ability to detect the metal impurities in the cathode material powder, thereby enhancing the reliability of the quality inspection.

## Claims

1. A method for quality examination of cathode materials for lithium-ion batteries comprising steps of:
adding cathode material powders to a surfactant solution to form a cathode material mixture solution;
transferring the cathode material mixture solution to ball milling to maintain even dispersion of the cathode material powders in the cathode material mixture solution;
filtering the cathode material mixture through a 200-mesh sieve, measuring the weight of a first residue that does not pass through the sieve, and determining whether the weight of the first residue exceed a first threshold value;
filtering the cathode material mixture through a 420-mesh sieve, measuring the weight of a second residue that does not pass through the sieve, and determining whether the weight of the second residue exceed a second threshold value; and
analyzing the second residual and determining whether multiple metal elements exceed multiple threshold values.

2. The method for quality examination of cathode materials for lithium-ion batteries according to claim 1, wherein the surfactant solution is a non-ionic surfactant solution.

3. The method for quality examination of cathode materials for lithium-ion batteries according to claim 2, wherein the non-ionic surfactant solution comprises polyoxyethylene lauryl ether, polyoxypropylene lauryl ether, or polyoxyethylene-polyoxypropylene lauryl ether.

4. The method for quality examination of cathode materials for lithium-ion batteries according to claim 1, wherein the step for analyzing the second residual utilizes inductively coupled plasma optical emission spectrometry (ICP-OES) to determine the elemental composition of the second residual.

5. The method for quality examination of cathode materials for lithium-ion batteries according to claim 1 or claim 3, wherein the cathode material powders comprise lithium iron phosphate (LiFePO₄, LFP), lithium cobalt oxide (LCO), ternary materials (NCM), lithium manganese oxide (LMO), lithium titanate (Li₄Ti₅O₁₂, LTO), or lithium nickel manganese oxide (LNMO).

6. The method for quality examination of cathode materials for lithium-ion batteries according to claim 1, claim 2, claim 3, or claim 5, wherein the cathode material mixture solution comprises 30 wt% of the cathode material powders.

7. The method for quality examination of cathode materials for lithium-ion batteries according to claim 1, claim 4, claim 5, or claim 6, wherein the metal elements comprise sodium, nickel, copper, magnesium, chromium, manganese, calcium, or zinc.

8. The method for quality examination of cathode materials for lithium-ion batteries according to claim 1, claim 2, claim3, claim 4, or claim 5, wherein the threshold values comprise a concentration limit of the metal elements in the second residue and a concentration limit of the metal elements in the cathode material powders.
